# EUROPÄISCHE PATENTSCHRIFT

(11) **EP 1 748 618 B1**
(45) Veröffentlichungstag und Bekanntmachung des Hinweises auf die Patenterteilung: **13.04.2016**
(21) Anmeldenummer: 06117190.6
(22) Anmeldetag: 14.07.2006
(51) Int. Cl.: H04L 29/06, H04L 29/12, H04L 29/08, H04L 12/24, H04L 12/26

(54) **Verfahren zum Aufbau einer netzübergreifenden Kommunikationsverbindung zwischen zumindest zwei Kommunikationsnetzwerken**
Method of establishing an inter-network communication connection between at least two communication networks
Procédé d'établissement d'une liaison de communication inter-réseaux entre au moins deux réseaux de communication

(30) Priorität: 27.07.2005 DE 102005035697
(43) Veröffentlichungstag der Anmeldung: 31.01.2007
(73) Patentinhaber: Fujitsu Technology Solutions Intellectual Property GmbH, 80807 München (DE)
(72) Erfinder: Büschgen, Klaus, 85551 Kirchheim (DE); Dichtl, Peter, 81739 München (DE); Schmartz, Pierre, 81667 München (DE); Schmitz, Karl, 81925 München (DE); Umlauf, Justin Ralf, 82194 Gröbenzell (DE); Wutscher, Alois, 86926 Greifenberg A.A (DE)
(74) Vertreter: Epping - Hermann - Fischer

(56) Entgegenhaltungen:
- US-A1- 2005 149 747
- TURANYI Z ET AL: "IPv4+4" PROCEEDINGS 10TH IEEE INTERNATIONAL CONFERENCE ON NETWORK PROTOCOLS IEEE COMPUT. SOC LOS ALAMITOS, CA, USA, 2002, Seiten 290-299, XP010632596 ISBN: 0-7695-1856-7
- V GURUPRASAD: "Canonical Simplification of Networking and the Internet" PUBLICATIONS OF THE NETWORK COMPUTING LAB, COLUMBIA UNIVERSITY DEPARTMENT OF COMPUTER SCIENCE, [Online] Februar 2005 (2005-02), Seiten 1-140, XP002466532 Gefunden im Internet: URL:http://www.ncl.cs.columbia.edu/publica tions/prasadthesis.pdf> [gefunden am 2008-01-28]

## Beschreibung

Zur Wartung von Kommunikationseinrichtungen innerhalb eines abgeschlossenen Kommunikationsnetzwerkes, beispielsweise eines Intranets sind Verfahren bekannt, bei denen eine gesicherte Kommunikationsverbindung zwischen einer ersten außerhalb des zu betreuenden Kommunikationsnetzwerkes angeordneten Kommunikationseinrichtung und einer zweiten zu wartenden Kommunikationseinrichtung aufgebaut werden. Bei den zu betreuenden Kommunikationsnetzwerken handelt es sich vorzugsweise um private Kommunikationsnetzwerke, welche über Schutzmaßnahmen wie beispielsweise eine Firewall vor fremden und unberechtigten Verbindungsaufbauversuchen weiterer Kommunikationseinrichtung aus dem öffentlichen Kommunikationsnetzwerk, beispielsweise dem Internet geschützt sind.

Unter einer Firewall ist die Gesamtheit aller Maßnahmen zur Abschirmung eines lokalen bzw. privaten Kommunikationsnetzwerks gegen Zugriffe von außen zu verstehen, wobei diese überwiegend zur Überwachung des Datenverkehrs von einem öffentlichen in das zu überwachende private Kommunikationsnetzwerk eingesetzt werden. Derartige Firewalls können sowohl hardware- als auch softwaremäßig realisiert sein, je nach Anforderungen an die zu überwachenden Kommunikationsanwendungen bzw. Dienste oder an den Sicherheitsgrad.

Prinzipiell werden drei Realisierungsarten einer Firewall unterschieden: die Paketfilterung, das Circuit Relay und das Application-Gateway bzw. Application-Level-Gateway. Diese können auch in Kombination vorgesehen sein.

Bei der Datenpaketfilterung werden die in das Kommunikationsnetzwerk ein- und ausgehenden Datenpakte auf der jeweiligen Schichtebene, d.h. beispielsweise der Sicherungsschicht, der Netzwerkschicht oder der Transportschicht anhand von vorgegebenen Tabellen analysiert und kontrolliert. Hierbei wird über ein Filtermodul der Datenpaketinhalt interpretiert und verifiziert, und zwar werden die Header der Datenpakete auf Ihre Regelkonformität bzgl. der vorgegebenen Kommunikationssteuerungsschicht überprüft..

Das Circuit-Relay-Konzept ("Kreis-Relais-Konzept") besteht aus einem Subnetz, einer netzinternen und einer netzexternen Routereinheit sowie einer Host-Kommunikationsanwendung als Verbindungspartner. Über die Host-Kommunikationsanwendung wird die Datenkommunikation durchgeführt, wodurch eine Transparenz des Netzaufbaus nach außen vermieden wird. Zum Aufbau einer Datenverbindung von einem außerhalb des privaten Kommunikationsnetzes befindlichen Kommunikationseinheit, beispielsweise eines Computersystems ist eine Anmeldung bei der Host-Kommunikationsanwendung erforderlich, die eine Zugangsberechtigung erfordert. Eine Überwachung des nach erfolgtem Verbindungsaufbau fließenden Datenpaketstromes findet nicht statt.

Die sicherste, jedoch auch technisch aufwendigste Realisierungsform einer Firewall stellt das Application-Level-Gateway-Konzept dar. Hierbei werden das private und das weitere, beispielsweise öffentliche Kommunikationsnetzwerk logisch und physikalisch voneinander entkoppelt. Zum Zugriff auf das private Kommunikationsnetzwerk ist eine Identifikation und Authentifikation erforderlich. Die ankommenden Datenpakete einer Kommunikationsverbindung werden in einer Proxy-Server-Einheit empfangen und über eine Proxy-Kommunikationsanwendung in das private Kommunikationsnetzwerk übertragen. Somit besteht keine direkte Verbindung zwischen der ersten außerhalb des privaten Kommunikationsnetzwerks befindlichen Kommunikationseinrichtung und der zweiten innerhalb des privaten Kommunikationsnetzwerks befindlichen Kommunikationseinrichtung. Abhängig von der jeweils zu überwachenden Kommunikationsanwendung können in der Proxy-Server-Einheit unterschiedliche dienstespezifische Gateways vorgesehen sein, beispielsweise für Telnet, E-Mail, http etc..

Um über eine in einem ersten privaten Kommunikationsnetzwerk angeordnete erste Kommunikationseinrichtung, beispielsweise eines Servicedienstleisters eine zweite, in einem zweiten privaten Kommunikationsnetzwerk angeordnete Kommunikationseinrichtung, beispielsweise eines Kunden warten zu können, ist jedoch eine direkte netzübergreifende Kommunikationsverbindung zwischen dem ersten und zweiten privaten Kommunikationsnetzwerk erforderlich. Hierbei erfolgt der Verbindungsaufbau überlicherweise über ein öffentliches Kommunikationsnetz, beispielsweise das Internet. Aus Sicherheitsgründen ist der Aufbau einer derartigen direkten und netzübergreifenden Kommunikationsverbindung, vorzugsweise über das öffentliche Kommunikationsnetzwerk mit den herkömmlichen Firewall-Konzepten nur schwer vereinbar.

Zum Aufbau einer gesicherten Verbindung zwischen einem ersten und zweiten Netzknoten sind bereits Verfahren, beispielsweise aus der dt. Patentanmeldung 04 022 978.3 bekannt, bei denen eine Anforderung zum Aufbau einer Kommunikationsverbindung zwischen einem ersten und einem zweiten Netzknoten von einer Kommunikationseinrichtung eines ersten Benutzers an eine Kommunikationseinrichtung eines zweiten Benutzers übermittelt wird. Die Anforderung umfasst eine den ersten Benutzer identifizierende Kennung und einen vorgebbaren individuellen Indikator. Anhand einer dem zweiten Benutzer zugeordneten Datenbasis bzw. der darin gespeicherten Dateneinträge wird ein der Kennung des ersten Benutzers zugeordneter Abschnitt einer den ersten Netzknoten identifizierenden Kennung ermittelt. Anhand des ermittelten Abschnitts der Kennung des ersten Netzknotens und des verbindungsindividuellen Indikators wird die Kennung des ersten Netzknotens ermittelt. Anschließend wird anhand der Kennung des ersten Netzknotens eine gesicherte Kommunikationsverbindung vom zweiten zum ersten Netzknoten aufgebaut. Derartige Systeme sind jedoch nicht zur Verbindung von Kommunikationseinrichtungen in topologisch vollständig eigenständigen Kommunikationsnetzwerken geeignet, da aufgrund der in den einzelnen Kommunikationsnetzwerken vorliegenden unterschiedlichen Sicherheitsmechanismen ein Aufbau einer direkten netzübergreifenden Kommunikationsverbindung nicht möglich ist.

Verfahren zum Aufbau einer Kommunikationsverbindung zwischen Kommunikationseinrichtungen in verschiedenen Kommunikationsnetzwerken sind beschrieben im Artikel "Ipv4+4" von Z. Turanyi et al., Proc. 10th IEEE International Conference on Network Protocols, USA, 2002, Seiten 290-299, ISBN 0-7695-1856-7 und in der Schrift "Canonical Simplification of Networking and the Internet" von V. Guruprasad, Network Computing Lab, Columbia University, Department of Computer Science, Februar 2005, Seiten 1-140.

Die Aufgabe der vorliegenden Erfindung ist darin zu sehen, ein flexibles Verfahren anzugeben, durch das der Aufbau einer direkten, netzübergreifenden Kommunikationsverbindung zwischen einer ersten Kommunikationseinrichtung eines ersten Kommunikationsnetzwerks und einer zweiten Kommunikationseinrichtung eines zweiten, topologisch vollständig vom ersten Kommunikationsnetzwerk getrennten Kommunikationsnetzwerks ermöglicht.

Erfindungsgemäß wird die Aufgabe durch ein Verfahren mit den in Anspruch 1 angegebenen Merkmalen gelöst. Vorteilhafte Weiterbildungen der vorliegenden Erfindung sind den abhängigen Ansprüchen zu entnehmen.

Der wesentliche Aspekt des erfindungsgemäßen Verfahrens zum Aufbau einer direkten netzübergreifenden Kommunikationsverbindung zwischen einer ersten Kommunikationseinrichtung eines ersten Kommunikationsnetzwerks und zumindest einer zweiten Kommunikationseinrichtung eines weiteren zweiten Kommunikationsnetzwerks über zumindest eine erste mit dem ersten Kommunikationsnetzwerk verbundene Vermittlungseinheit und zumindest einer zweiten mit zumindest einem der weiteren zweiten Kommunikationsnetzwerke verbundenen Vermittlungseinheit ist darin zu sehen, dass zumindest der einen zweiten vermittlungseinheit, der zweiten Kommunikationseinrichtung sowie zumindest einer in der zweiten Kommunikationseinrichtung vorgesehenen Kommunikationsanwendungen bezüglich des ersten Kommunikationsnetzwerks eindeutige symbolische Adressnummern zugeordnet werden. Aus den symbolischen Adressnummern der zum Aufbau der netzübergreifenden Kommunikationsverbindung vorgesehenen zweiten Vermittlungsstelle, zumindest einer zweiten Kommunikationseinrichtung sowie zumindest einer der auf der genannten zweiten Kommunikationseinrichtung vorgesehenen Kommunikationsanwendung wird zumindest teilweise ein symbolischer Adressindikator gebildet und ausgehend von der ersten Kommunikationseinrichtung anhand des gebildeten symbolischen Adressindikators über die erste und zweite Vermittlungsstelle eine direkte, netzübergreifende Kommunikationsverbindung zur zweiten Kommunikationseinrichtung aufgebaut. Durch die Verwendung des erfindungsgemäßen symbolischen Adressindikators ist die Herstellung einer direkten netzübergreifenden Kommunikationsverbindung auf Applikationsebene zwischen Clientrechner und Servicerechner ohne Modifikationen der Sicherheitseinstellungen möglich, obwohl die Client-Kommunikationseinrichtung und die Server-Kommunikationseinrichtung in topologisch getrennten Kommunikationsnetzwerken beispielsweise Firmenintranets angeordnet sind. Der symbolische Adressindikator bildet somit eine Art "Ticket", welches sämtliche für den Aufbau der direkten, netzübergreifenden Kommunikationsverbindung erforderlichen Topologieinformationen enthält.

Die vorliegende Erfindung wird nachfolgend an einem Ausführungsbeispiel anhand der Figuren näher erläutert.

Es zeigen:
- Fig. 1: beispielhaft in einem schematischen Blockschaltbild ein aus mehreren Kommunikationsnetzwerken bestehendes Kommunikationssystem,
- Fig. 2: beispielhaft anhand eines Ablaufdiagrammes die einzelnen Schritte des erfindungsgemäßen Verfahrens und
- Fig. 3: beispielhaft in einer vereinfachten Darstellung den Aufbau eines symbolischen Adressindikators gemäß der Erfindung.

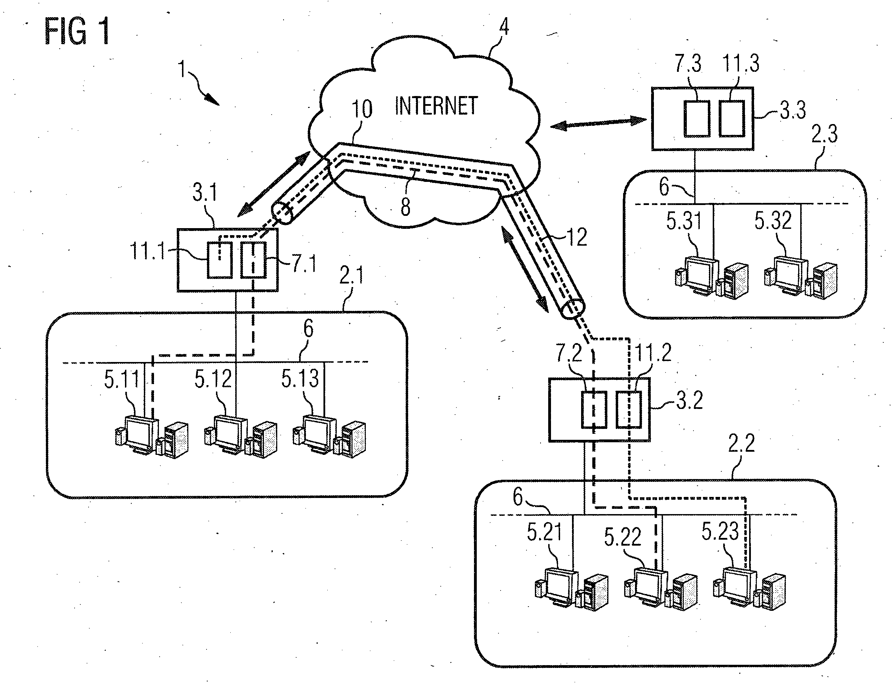

In Fig. 1 ist in einem schematischen Blockschaltbild ein Kommunikationssystem 1 dargestellt, bei dem mehrere private Kommunikationsnetzwerke 2, beispielsweise ein erstes, zweites und drittes Kommunikationsnetzwerk 2.1, 2.2, 2.3 über jeweils zumindest eine Vermittlungsstelle, beispielsweise eine erste, zweite und dritte Vermittlungseinheit 3.1, 3.2, 3.3 an ein öffentliches Kommunikationsnetzwerk 4, vorzugsweise das Internet angeschlossen sind. Hierbei sind die Anzahl, der Aufbau und die Anordnung der privaten Kommunikationsnetzwerke 2 bzgl. des öffentlichen Kommunikationsnetzwerks 4 beispielhaft gewählt und können beliebigen variiert werden.

Das erste Kommunikationsnetzwerk 2.1 stellt beispielsweise das Intranet eines Servicedienstleisters dar, der mit der Wartung beispielsweise des zweiten und dritten - vom ersten Kommunikationsnetzwerk 2.1 vollständig topologisch getrennten - Kommunikationsnetzwerkes 2.2, 2.3 beauftragt ist. Zu Wartungszwecken ist der Aufbau einer direkten und netzübergreifenden Kommunikationsverbindung 8 zwischen dem ersten Kommunikationsnetzwerk 2.1 über das öffentliche Kommunikationnetzwerk 4 zum zu wartenden zweiten oder dritten Kommunikationsnetzwerk 2.2, 2.3 erforderlich. Das zweite und dritte Kommunikationsnetzwerk 2.2, 2.3 sind beispielsweise ebenfalls als Intranets ausgebildet, welche in sich geschlossene eigenständige, d.h. topologisch eigenständige Kommunikationsnetzwerke 2 darstellen.

Das erste bis dritte Kommunikationsnetzwerk 2.1 - 2.3 weisen jeweils eine Vielzahl von vernetzten Kommunikationseinrichtungen 5 auf, welche beispielsweise als Rechnersysteme bzw. Computereinheiten ausgebildet sein können. Die Kommunikationseinrichtungen 5 weisen Kommunikationsports (in den Figuren nicht dargestellt) auf, über die die jeweils auf den Kommunikationseinrichtungen 5 ausgeführten Kommunikationsanwendungen wie beispielsweise Kommunikationsdienste etc. kommunizieren. Hierbei sind in an sich bekannter Weise Portnummern für einzelne Kommunikationsanwendungen reserviert.

Bei dem in Figur 1 dargestellten Ausführungsbeispiel sind im ersten Kommunikationsnetzwerk 2.1 eine erste, zweite und dritte Kommunikationseihrichtung 5.11, 5.12, 5.13 vorgesehen. Das zweite Kommunikationsnetzwerk 2.2 umfasst ebenfalls eine erste bis dritte Kommunikationseinrichtung 5.21, 5.22, 5.23, wobei das dritte Kommunikationsnetzwerk 2.3 eine erste und zweite Kommunikationseinrichtung 5.31, 5.32 umfasst. Die einzelnen dargestellten Kommunikationseinrichtungen 5.11 bis 5.13, 5.21 bis 5.23, 5.31, 5.32 eines Kommunikationsnetzwerks 2.1, 2.2, 2.3 sind jeweils über Verbindungsleitungen 6 innerhalb des jeweiligen privaten Kommunikationsnetzwerks 2.1, 2.2, 2.3 miteinander vernetzt.

Ferner ist an das erste Kommunikationsnetzwerk 2.1 die erste Vermittlungseinheit 3.1 angeschlossen, welche eine Verbindung von dem ersten Kommunikationsnetzwerk 2.1 zum öffentlichen Kommunikationsnetzwerk 4 herstellt. Analog hierzu sind zur Verbindung des zweiten und dritten Kommunikationsnetzwerkes 2.2, 2.3 mit dem öffentlichen Kommunikationsnetzwerk 4 ebenfalls die zweite und dritte Vermittlungseinheit 3.2, 3.3 vorgesehen. Hierbei sind vorzugsweise die Verbindungsleitungen 6 des jeweiligen Kommunikationsnetzwerks 2.1 bis 2.3 jeweils an die vorgeschaltete Vermittlungseinheit 3.1 bis 3.3 geführt, so dass zwischen den einzelnen Kommunikationseinrichtungen 5.11 bis 5.13, 5.21 bis 5.23, 5.31, 5.32 und der zugehörigen Vermittlungseinheit 3.1 bis 3.3 eine direkte Verbindung besteht.

Die erste bis dritte Vermittlungseinheit 3.1 bis 3.3 ist beispielhaft jeweils als Application-Level-Firewall-Einheit (ALF) ausgebildet, vorzugsweise als erste, zweite und dritte ALF-Einheit 3.1, 3.2, 3.3. Die erste ALF-Einheit 3.1 weist eine erste Proxy-Server-Einheit 7.1, die zweite ALF-Einheit 3.2 eine zweite Proxy-Server-Einheit 7.2 und die dritte ALF-Einheit 3.2 eine dritte Proxy-Server-Einheit 7.3 auf, über die die Proxy-Funktionalitäten der ersten bis dritten ALF-Einheiten 3.1, 3.2, 3.3. implementiert werden. Über die Proxy-Server-Einheiten 7.1 - 7.3 erfolgt somit eine logische und physikalische Entkopplung auf Internet-Protokoll-(IP)-Ebene des jeweiligen privaten Kommunikationsnetzwerks 2.1 bis 2.3 von dem öffentlichen Kommunikationsnetzwerk 4.

Beim Aufbau einer Kommunikationsverbindung 8 von einem privaten Kommunikationsnetzwerk 2 in das öffentliche Kommunikationsnetzwerk bzw. ins Internet 4 wird über die vorgeschaltete erste Proxy-Server-Einheit 7.1 eine automatische Adressübersetzung durchgeführt. Die Proxy-Server-Einheiten 7.1 bis 7.3 schicken hierbei die aus dem jeweiligen privaten Kommunikationsnetzwerk 2.1 bis 2.3 erhaltenen Verbindungsanfragen unter der jeweils eigenen Adresse mit zugehöriger Kommunikationsportnummer an das öffentliche Kommunikationsnetzwerk 4 weiter und leiten analog hierzu die vom öffentlichen Kommunikationsnetzwerk 4 erhaltenen Verbindungsanfragen an die entsprechende Kommunikationseinrichtung 5 des privaten Kommunikationsnetzwerk 2.1 bis 2.3 weiter.

Die Berechtigung zum Zugriff erfolgt somit ausschließlich über die erste bis dritte Proxy-Server-Einheiten 7.1 bis 7.3, die alle Anfragen sammelt und somit den Aufbau einer direkten Kommunikationsverbindung 8 zwischen den die Kommunikationsverbindung initiierenden ersten außerhalb des zu schützenden Kommunikationsnetzwerks 2.2 befindlichen Kommunikationseinrichtung 5.11 und einer im zu schützenden Kommunikationsnetzwerk 2.2 befindlichen zweiten Kommunikationseinrichtung 5.22 verhindert. Die eigentliche Struktur sowie die netzinternen Adressnummern der jeweiligen Kommunikationseinrichtungen bzw. Kommunikationsanwendungen bzw. Kommunikationsportnummern innerhalb des geschützten privaten Kommunikationsnetzwerks 2.2 sind somit von außen nicht ersichtlich und somit auch nicht direkt ansprechbar.

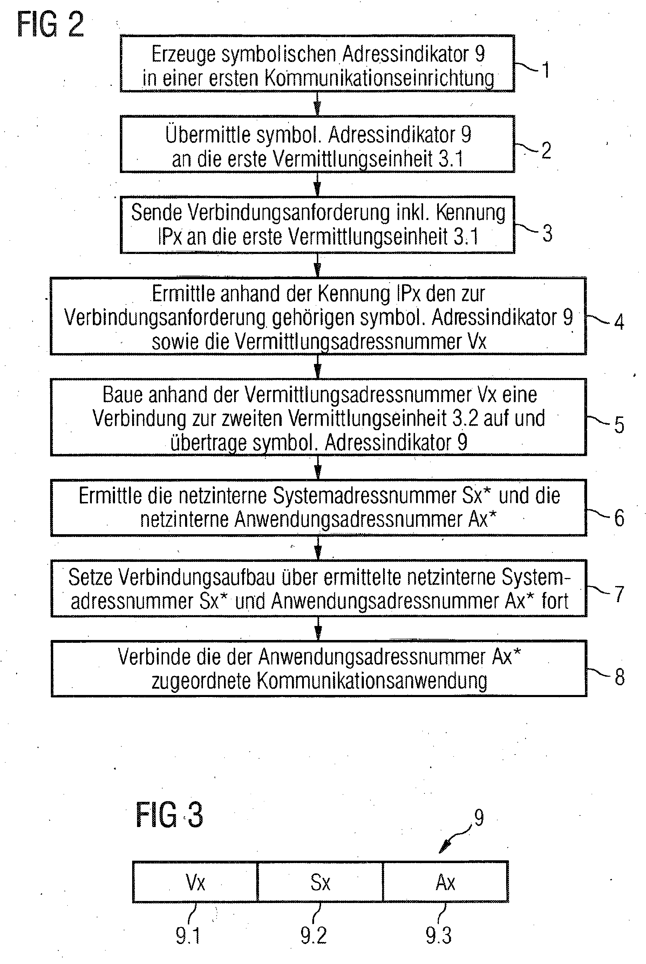

In Fig. 2 ist beispielhaft anhand eines schematischen Ablaufdiagrammes der Aufbau zumindest einer direkten netzübergreifenden Kommunikationsverbindung 8 in einem Kommunikationssystem gemäß Fig. 1 erläutert. Zum Aufbau einer derartigen direkten netzübergreifenden Kommunikationsverbindung 8 ist es erforderlich, die zu wartenden Kommunikationseinrichtungen bzw. Komponenten des jeweiligen privaten Kommunikationsnetzwerks 2.2, 2.3 (Kundenintranets) direkt ansprechen zu können.

Hierzu werden zunächst sämtlichen zu wartenden Kommunikationseinrichtungen 5.21 bis 5.23, 5.31, 5.32 der zu betreuenden Kommunikationsnetzwerke 2.2, 2.3 sowie den zweiten und dritten ALF-Einheiten 3.2, 3.3 ebenso wie den auf den Kommunikationseinrichtungen 5.21 bis 5.23, 5.31, 5.32 vorgesehenen Kommunikationsanwendungen symbolische Adressnummern Vx, Sx, Ax zugeordnet und in den genannten Netzwerkkomponenten bzw. - einheiten hinterlegt. Diese können beispielsweise in Form von Datensätzen in ein oder mehreren in den genannten Netzwerkkomponenten bzw. Einheiten vorgesehenen Speichereinheiten (in den Figuren nicht dargestellt) abgelegt werden.

In einem ersten Schritt wird beispielsweise in der ersten Kommunikationseinrichtung 5.11 des ersten Kommunikationsnetzwerks 3.1 (Intranet des Servicedienstleisters) ein symbolischer Adressindikator 9 erzeugt. Der Aufbau eines derartigen symbolischen Adressindikators 9, der beispielsweise ein "Verbindungsticket" darstellt, ist in Figur 3 schematisch dargestellt.

Hierbei weist der symbolische Adressindikator 9 gemäß dem dargestellten Ausführungsbeispiel eine erste bis dritte symbolische Adresskomponente 9.1 bis 9.3 auf, wobei die erste symbolische Adresskomponente 9.1 die der Vermittlungsstelle bzw. der ALF-Einheit 3.2, 3.3 zugeordnete symbolische Vermittlungsadressnummer Vx, die zweite symbolische Adresskomponente 9.2 die der jeweiligen Kommunikationseinrichtung 5 zugeordnete symbolische Systemadressnummer Sx und die dritte symbolische Adresskomponente 9.3 die der jeweiligen Kommunikationsanwendung in der zweiten oder dritten Kommunikationseinrichtung 2.2, 2.3 zugeordnete symbolische Anwendungsadressnummer Ax umfasst. Durch die Kombination einer symbolischen Vermittlungsadressnummer Vx, einer symbolischen Systemadressnummer Sx und einer symbolischen Anwendungsadressnummer Ax ergibt sich ein bezüglich des ersten Kommunikationsnetzwerkes 2.1 eindeutiger symbolischer Adressindikator 9, der die zum Aufbau der direkten netzübergreifenden Kommunikationsverbindung 8 erforderlichen Verbindungsressourcen angibt.

Die in Figur 3 dargestellten ersten bis dritten Adresskomponenten 9.1 bis 9.3 sind beispielhaft gewählt und können durch geeignete weitere Komponenten ergänzt bzw. in unterschiedlichen Reihenfolgen zueinander angeordnet werden. Beispielsweise können optional weitere Informationen wie beispielsweise der Name, die Emailadresse oder die Kennung des Servicemitarbeiters über den symbolischen Adressindikator 9 mit übermittelt werden.

Der in der ersten Kommunikationseinrichtung 5.11 des ersten Kommunikationsnetzwerks 2.1 erzeugte symbolische Adressindikator 9 wird über die Verbindungsleitungen 6 des ersten Kommunikationsnetzwerk 1 an die erste Vermittlungsstelle 3.1, d.h. an die Proxy-Server-Einheit 7.1 der ersten ALF-Einheit 3.1 übermittelt und in dieser abgespeichert. Dies entspricht dem zweiten Schritt des in Fig. 2 dargestellten Ablaufdiagrammes.

Zusätzlich zu dem an die erste ALF-Einheit 3.1 übermittelten symbolischen Adressindikators 9 wird in der ersten ALF-Einheit 3.1 eine die erste Kommunikationseinrichtung 5.11 kennzeichnende Kennung, vorzugsweise deren Internet-Protokoll (IP) Adresse IPx hinterlegt, so dass in der ersten ALF-Einheit 3.1 eine Verknüpfung zwischen dem hinterlegten symbolischen Adressindikator 9 und der den Ausgangspunkt der durch den Adressindikator 9 beschriebenen Kommunikationsverbindung 8 bildenden ersten Kommunikationseinrichtung 5.11 besteht.

In einem dritten Schritt wird zum Aufbau der direkten netzübergreifenden Kommunikationsverbindung 8 über eine in der ersten Kommunikationseinrichtung 5.11 vorgesehenen Kommunikationsanwendung, beispielsweise eine Telnet-Client-Anwendung oder eine PC-Anywhere-Client-Anwendung eine Verbindungsanforderung initiiert, d.h. von der ersten Kommunikationseinrichtung 5.11 an die erste ALF-Einheit 3.1 übermittelt. Die Verbindungsanforderung weist zumindest die die erste Kommunikationseinrichtung 5.11 und/oder die Kommunikationsanwendung identifizierende Kennung IPx, vorzugsweise die Internetprotokolladresse der ersten Kommunikationseinrichtung 5.11 beispielsweise zusammen mit der Kommunikationsportadresse der Kommunikationsanwendung auf. Anhand der mit der Verbindungsanforderung mit übermittelten Kennung IPx wird in der ersten Proxy-Server-Einheit 7.1 der zugehörige symbolische Adressindikator 9 ermittelt, der die für den weiteren Verbindungsaufbau erforderlichen symbolischen Adressnummern Vx, Sx, Ax enthält.

In der ersten Proxy-Server-Einheit 7.1 wird in einem vierten Schritt der zur Kennung IPx zugeordnete symbolische Adressindikator 9 ermittelt und der Verbindungsanforderung zugeordnet. Durch die erste Proxy-Server-Einheit 7.1 wird anschließend der Inhalt der ersten symbolischen Adresskomponente 9.1 des ermittelten symbolischen Adressindikators 9 bestimmt und hierdurch die symbolische Vermittlungsadressnummer Vx der zweiten ALF-Einheit 3.2 ermittelt. Anhand der ermittelten symbolischen Vermittlungsadressnummer Vx wird eine Verbindung zu der zugehörigen zweiten ALF-Einheit 3.2 über das öffentliche Kommunikationsnetzwerk 4 aufgebaut.

Hierzu wird beispielsweise von der ersten ALF-Einheit 3.1 durch das öffentliche Kommunikationsnetzwerk bzw. das Internet 4 zur zweiten ALF-Einheit 3.2 eine Virtual-PrivateNetwork (VPN) Tunnelverbindung 10 aufgebaut, die eine sichere Datenkommunikation über das Internet 4 gewährleistet. Die VPN-Tunnelverbindung 10 wischen der ersten und zweiten ALF-Einheit 3.1, 3.2 stellt somit ein weiteres topologisch vom ersten bis dritten Kommunikationsnetzwerk 2.1, 2.2, 2.3 eigenständiges Kommunikationsnetzwerk dar.

In einem fünften Schritt wird neben dem Aufbau der Verbindung zur zweiten Vermittlungsstelle 3.2 bzw. zur zweiten ALF-Einheit 3.2 der symbolische Adressindikator 9 zumindest teilweise an die zweite Proxy-Server-Einheit 7.2 der ermittelten zweiten ALF-Einheit 3.2 übertragen und dort gespeichert.

In der zweiten Proxy-Server-Einheit 7.2 wird in einem sechsten Schritt anhand der zweiten symbolischen Adresskomponente 9.2 des übermittelten symbolischen Adressindikators 9 die bezüglich des zweiten Kommunikationsnetzwerkes 2.2 eindeutige netzinterne Systemadressnummer Sx* der zweiten Kommunikationseinrichtung 5.22 ermittelt. Hierzu wird die in der zweiten symbolischen Adresskomponente 9.2 des übermittelten symbolischen Adressindikators 9 enthaltene symbolische Systemadressnummer Sx bestimmt und mit den in der zweiten Vermittlungseinheit 3.2 hinterlegten Speichereinträgen verglichen. Über die in der zweiten Vermittlungseinheit 3.2 hinterlegten symbolischen Systemadressnummer Sx und deren Verknüpfung mit der bezüglich des zweiten Kommunikationsnetzwerkes 2.2 eindeutigen netzinternen Systemadressnummer Sx* ist eine eindeutige Bestimmung der anzusprechenden zweiten Kommunikationseinrichtung 5.22 bzw. des anzusprechenden Computersystems 5.22 in dem zweiten Kommunikationsnetzwerk 2.2 für den weiteren Verbindungsaufbau möglich. Hierbei kann beispielsweise als Systemadressnummer Sx* die Internet-Protocol-Adresse der zweiten Kommunikationseinrichtung 5.22 innerhalb des zweiten Kommunikationsnetzwerks 2.3 verwendet werden.

Neben der Ermittlung der bezüglich des zweiten Kommunikationsnetzwerkes 2.2 eindeutigen netzinternen Systemadressnummer Sx* der zweiten Kommunikationseinrichtung 5.22 wird ausgehend von der in der dritten Adresskomponente 9.3 übermittelten symbolischen Anwendungsadressnummer Ax in an sich analoger Weise die netzinterne Anwendungsadressnummer Ax* ermittelt. Hierzu wird die symbolische Anwendungsadressnummer Ax mit den in der zweiten Vermittlungseinheit 3.2 hinterlegten Speichereinträgen verglichen und die bezüglich der zweiten Kommunikationsnetzwerkes 2.2 eindeutige netzinterne Anwendungsadressnummer Ax*, beispielsweise die Kommunikationsportnummer der anzusprechenden Kommunikationsanwendung in der zweiten Proxy-Server-Einheit 7.2 bestimmt.

Über die ermittelte bezüglich des zweiten Kommunikationsnetzwerkes 2.2 eindeutige netzinterne Systemadressnummer Sx* sowie die netzinterne Anwendungsadressnummer Ax* wird der Aufbau der direkten und netzübergreifenden Kommunikationsverbindung 8 gesteuert über die zweite Proxy-Server-Einheit 7.2 von der zweiten ALF-Einheit 3.2 zur zweiten Kommunikationseinrichtung 5.22 des zweiten Kommunikationsnetzwerks 2.2 in einem siebten Schritt fortgesetzt. Hierzu wird über die zweite Proxy-Server-Einheit 7.2 zur über die netzinterne Anwendungsadressnummer Ax* ermittelten Kommunikationsportnummer eine Verbindung aufgebaut und in einem achten und letzten Schritt die anhand der netzinternen Anwendungsadressnummer Ax* identifizierte und auf der zweiten Kommunikationseinrichtung 5.22 ausgeführte Kommunikationsanwendung automatisch verbunden.

Als kundenseitige Kommunikationsanwendung sind zur Realisierung des Client-Server-Prinzips geeignete Kommunikationsanwendungen wie beispielsweise eine Telnet-Daemon-Anwendung oder PC-Anyware-Host-Anwendung vorgesehen, welche über die erste und zweite Proxy-Server-Einheit 7.1, 7.2 mit der in der ersten Kommunikationseinrichtung 5.11 vorgesehenen Telnet-Client-Anwendung bzw. PC-Anywhere-Client-Anwendung kommunizieren können. Somit können für das beschriebene Verfahren sämtliche Client-Server-Kommunikationsanwendungen eingesetzt werden, bei denen die Datenübertragung über eine Transmission Control Protocoll (TCP)-Datenverbindüng erfolgt, zumal die jeweilige Proxy-Server-Einheit 7.1, 7.2, 7.3 die erforderlichen Navigationsinformationen anhand des erfindungsgemäßen symbolischen Adressindikators 9 erhält.

Über die auf dem ersten Computersystem 5.11 im ersten Kommunikationsnetzwerk 2.1 des Servicedienstleisters gestartete Client-Kommunikationsanwendung und die direkte, netzübergreifende Kommunikationsverbindung 8 zu dem in der zweiten Kommunikationseinrichtung 5.22 auf dem zweiten Computersystem 5.22 ausgeführte Server-Kommunikationsanwendung wird somit eine netzübergreifende Wartung eines Kundensystems direkt vom Arbeitsplatz eines Servicemitarbeiters aus einem Servicenetzwerk möglich, ohne hierdurch die üblichen Sicherheitsmaßnahmen der topologisch voneinander getrennten Kommunikationsnetzwerke 2.1, 2.2 reduzieren oder verändern zu müssen.

Darüber hinaus ist das Vorsehen eines "Rückkanals" möglich, über den der Servicedienstleister durch die jeweilige Kommunikationseinrichtung 5.21, 5.22, 5.23 beispielsweise des zweiten Kommunikationsnetzwerks 2.2 (Kundenintranet) über aktuelle Betriebszustände oder Ereignisse informiert werden kann. Hierzu ist in der ersten bis dritten Vermittlungseinheit 3.1 bis 3.3 jeweils eine Call-Proxy-Einheit 11.1 bis 11.3 vorgesehen, welche mit in den Kommunikationseinrichtungen vorgesehenen Serviceroutinen zusammenwirken. Anhand der Serviceroutinen werden Meldungen an den Servicedienstleister, beispielsweise in Form von Alarmmeldungen oder Betriebszustandsmeldungen übermitteln.

Zur Übermittlung der Alarmmeldungen oder Betriebszustandsmeldungen betreffenden Daten ist es erforderlich Über die auf den Kommunikationseinrichtungen 5.21, 5.22, 5.23 ausgeführten Serviceroutinen abhängig vom vorliegenden Betriebszustand eine direkte netzübergreifende Kommunikationsverbindung 12 von der jeweiligen Kommunikationseinrichtung 5.21 bis 5.23 des zweiten Kommunikationsnetzwerkes 2.2 aufzubauen, aufrechtzuerhalten und nach erfolgter Übergabe der Daten wieder abzubauen.

Über die jeweils in den Speichereinheiten der Kommunikationseinrichtungen 5.21, 5.22, 5.23, 5.31, 5.32 des zweiten und dritten Kommunikationsnetzwerks 2.2, 2.3 hinterlegten netzinternen Systemadressnummern Sx* und der der jeweiligen Steuerroutine zugeordneten Kommunikationsportnummer Kx wird der zweiten bzw. dritten Vermittlungseinheit 3.2, 3.3 nach Eintritt eines vorgegeben Ereignisses durch die vorgesehene Softwareroutine automatisch eine Verbindung zur angeschlossenen zweiten bzw. dritten Call-Proxy-Einheit 11.2, 11.3 aufgebaut. Die über die Verbindungsanfrage mit übermittelten Systemadressnummern Sx* und/oder der zugeordneten Kommunikationsportnummer Kx der dritten Kommunikationseinrichtung 5.23 des zweiten Kommunikationsnetzwerks 2.2 werden mit den in der zweiten Vermittlungseinheit 3.2 hinterlegten Datensätzen verglichen und die der vorliegenden Kommunikationsportnummer Kx zugeordnete Vermittlungsadressnummer Vx der zu benachrichtigenden ersten ALF-Einheit 3.1 bzw. dessen erster Call-Server-Einheit 11.1 ermittelt. Anschließend wird eine Kommunikationsverbindung 12 über das öffentliche Kommunikationsnetzwerk 4 zu der ermittelten Vermittlungsadressnummer Vx bzw. der zugehörigen ersten Call-Server-Einheit 11.1 aufgebaut und an diese die Alarmmeldungen oder Betriebszustandsmeldungen automatisch übertragen.

Die übermittelten Alarmmeldungen oder Betriebszustandsmeldungen weder entweder in der ersten ALF-Einheit 3.1 gespeichert oder an eine festgelegte Call-Service-Einheit innerhalb der ersten Kommunikationsnetzwerks 2.1 überragen oder zur Weiterverarbeitung an ein Mailsystem übergeben.

Vorteilhaft können durch das voranstehend beschriebene Verfahren direkte netzübergreifende Kommunikationsverbindungen 8 zwischen einer Client-Kommunikationsanwendung und einer Server-Kommunikationsanwendung durchgängig erstellt werden, obwohl diese unterschiedliche topologisch voneinander getrennte Netzwerke angehören, so dass die netzwerkmässige Trennung der beteiligten Kommunikationsnetzwerke 2.1, 2.2, 2.3 hierbei weiterhin gewährleistet ist.

Weiterhin vorteilhaft können nur einzelne Servicemitarbeitern zur Ausstellung eines derartigen "Verbindungstickets" im ersten Kommunikationsnetzwerk 2.1 berechtigt werden. Hierzu werden den einzelnen Servicemitarbeitern Berechtigungen zugeordnet, welche die Erzeugung eines symbolischen Adressnummer 9 allgemein, für bestimmte Kommunikationsnetzwerke oder Kommunikationseinrichtungen ermöglichen oder verbieten.

Darüber hinaus können zur Realisierung an sich bekannter Redundanzkonzepte die erste bis dritte Vermittlungseinheit 3.1, 3.2, 3.3 jeweils doppelt vorgesehen sein, welche jeweils über eine weitere über eine unterschiedliche Verbindungsstrecke durch das öffentliche Kommunikationsnetzwerk 4 geführte Virtual-Private-Network (VPN) Tunnelverbindung (nicht in den Figuren dargestellt) beim Aufbau einer direkten, netzübergreifenden Kommunikationsverbindung 8 miteinander in Verbindung stehen.

Die Erfindung wurde voranstehend anhand eines Ausführungsbeispiels näher beschrieben. Es versteht sich von selbst, daß zahlreiche Modifikationen sowie Abwandlungen möglich sind, ohne daß dadurch der der Erfindung zugrunde liegende Erfindungsgedanke verlassen wird.

## Patentansprüche

1. Verfahren zum Aufbau einer netzübergreifenden Kommunikationsverbindung (8) zwischen einer ersten Kommunikationseinrichtung (5.11) eines ersten Kommunikationsnetzwerks (2.1) und einer Kommunikationsanwendung in einer zweiten Kommunikationseinrichtung (5.22) eines zweiten Kommunikationsnetzwerks (2.2) über eine erste mit dem ersten Kommunikationsnetzwerk (2.1) verbundene Vermittlungseinheit (3.1) und eine zweite mit dem zweiten Kommunikationsnetzwerk (2.2) verbundene Vermittlungseinheit (3.2), wobei der zweiten Kommunikationseinrichtung (5.22) eine bezüglich des zweiten Kommunikationsnetzwerkes (3.2) netzinterne Systemadressnummer (Sx*) zugeordnet ist und der in der zweiten Kommunikationseinrichtung (5.22) vorgesehenen Kommunikationsanwendung eine bezüglich des zweiten Kommunikationsnetzwerkes (3.2) netzinterne Anwendungsadressnummer (Ax*) zugeordnet ist,
- bei dem der zweiten Vermittlungseinheit (3.2) eine eindeutige, symbolische Vermittlungsadressnummer (Vx) zugeordnet wird, der zweiten Kommunikationseinrichtung (5.22) eine bezüglich des ersten Kommunikationsnetzwerks (3.1) eindeutige symbolische Systemadressnummer (Sx) zugeordnet wird und der in der zweiten Kommunikationseinrichtung (5.22) vorgesehenen Kommunikationsanwendung eine bezüglich des ersten Kommunikationsnetzwerks (3.1) eindeutige symbolische Anwendungsadressnummer (Ax) zugeordnet wird,
- bei dem ein symbolischer Adressindikator (9) gebildet wird, der zumindest die symbolische Vermittlungsadressnummer (Vx), die symbolische Systemadressnummer (Sx) und die symbolische Anwendungsadressnummer (Ax) umfasst,
- bei dem ausgehend von der ersten Kommunikationseinrichtung (5.11) mittels der symbolischen Vermittlungsadressnummer (Vx) über die erste Vermittlungseinheit (3.1) eine Kommunikationsverbindung (8) zur zweiten Vermittlungseinheit (3.2) aufgebaut wird, über die der symbolische Adressindikator (9) zumindest teilweise an die zweite Vermittlungseinheit (3.2) übertragen wird,
- bei dem zumindest die in dem übermittelten symbolischen Adressindikator (9) enthaltene symbolische Systemadressnummer (Sx) und Anwendungadressenummer (Ax) bestimmt und mit in der zweiten Vermittlungseinheit (3.2) hinterlegten Datensätzen verglichen und die eindeutige netzinternen Systemadressnummer (Sx*) bzw. Anwendungsadressnummer (Ax*) anhand der in dem Adressindikator (9) enthaltenen symbolischen Adressnummern (Sx, Ax) aus den in der zweiten Vermittlungseinheit (3.2) hinterlegten Datensätzen ermittelt werden und
- bei dem die Kommunikationsverbindung (8) anhand der netzinternen Adressnummern (Sx*, Ax*) über die zweite Kommunikationseinrichtung (5.22) zur Kommunikationsanwendung fortgesetzt wird,
- bei dem der symbolische Adressindikator (9) der netzübergreifenden Kommunikationsverbindung (8) im ersten Kommunikationsnetzwerk (3.1) jeweils vor dem Verbindungsaufbau in der ersten Kommunikationseinrichtung (5.11) erzeugt, an die erste Vermittlungseinheit (3.1) übermittelt und in der ersten Vermittlungseinheit (3.1) gespeichert wird,
- bei dem eine Verbindungsanforderung mit zumindest einer die erste Kommunikationseinrichtung (5.11) identifizierenden Kennung (IPx) von der ersten Kommunikationseinrichtung (5.11) an die erste Vermittlungseinheit (3.1) übermittelt wird und in der ersten Vermittlungseinheit (3.1) anhand der mit der Verbindungsanforderung übermittelten Kennung (IPx) der zugehörige symbolische Adressindikator (9) ermittelt wird.

2. Verfahren nach Anspruch 1, bei dem der Aufbau der netzübergreifenden Kommunikationsverbindung (8) über eine in der ersten Kommunikationseinrichtung (5.11) ausgeführten Kommunikationsanwendung initiiert wird.

3. Verfahren nach einem der Ansprüche 1 bis 2, bei dem in der zweiten Vermittlungseinheit (3.2) anhand der in dem symbolischen Adressindikator (9) enthaltenen symbolischen Adressnummer (Sx) über die in der zweiten Vermittlungseinheit (3.2) hinterlegten Datensätze eine eindeutige netzinterne Systemadressnummer (Sx*) der zweiten Kommunikationseinrichtung (5.22) ermittelt wird, eine Verbindung zu der ermittelten zweiten Kommunikationseinrichtung (5.22) des zweiten Kommunikationsnetzwerks (2.2) aufgebaut und der symbolische Adressindikator (9) zumindest teilweise an die ermittelte zweite Kommunikationseinrichtung (5.22) übertragen wird.

4. Verfahren nach Anspruch 3, bei dem in der zweiten Kommunikationseinrichtung (5.22) anhand der im symbolischen Adressindikator (9) enthaltenen symbolischen Adressnummer (Ax) über die in der zweiten Vermittlungseinheit (3.2) hinterlegten Datensätze die eindeutige netzinterne Anwendungsadressnummer (Ax*) der zu verbindenden Kommunikationsanwendung ermittelt wird und die ermittelte Kommunikationsanwendung in der zweiten Kommunikationseinrichtung (2.2) verbunden wird.

5. Verfahren nach einem der Ansprüche 1 bis 4, bei dem die erste und zweite Vermittlungseinheit (3.1, 3.2) über eine Virtual Private Network, VPN, Tunnelverbindung (10) miteinander verbunden werden.

6. Verfahren nach einem der Ansprüche 1 bis 5, bei dem die Vermittlungseinheiten (3.1, 3.2, 3.3) jeweils durch eine Application-Level-Firewall-Einheit, ALF-Einheit, gebildet werden, die jeweils zumindest eine Proxy-Server-Einheit (7.1, 7.2, 7.3) aufweisen.

7. Verfahren nach Anspruch 6, bei dem über die ALF-Einheiten eine Trennung der jeweils mit den ALF-Einheiten verbundenen Kommunikationsnetzwerke (2.1, 2.2, 2.3) auf Internet-Protokoll-Ebene durchgeführt wird.

8. Verfahren nach einem der Ansprüche 1 bis 7, bei dem die die erste Kommunikationseinrichtung (5.11) identifizierende Kennung (IPx) zumindest teilweise aus der Internet-Protokoll-Adresse der ersten Kommunikationseinrichtung (5.11) gebildet wird.

9. Verfahren nach Anspruch 8, bei dem als Kommunikationsanwendungen in der ersten bzw. zweiten Kommunikationseinrichtung (5.11, 5.22) Client- bzw. Server-Kommunikationsanwendungen ausgeführt werden, bei denen die Datenübertragung über eine Transmission Control Protocol, TCP, Datenverbindung erfolgt.

10. Verfahren nach einem der Ansprüche 1 bis 9, bei dem in den zweiten Kommunikationseinrichtungen (5.21, 5.22, 5.23, 5.31, 5.32) vorgesehene Serviceroutinen ausgeführt werden, welche abhängig vom Vorliegen vorgegebener Betriebszustände oder Ereignisse automatisch den Aufbau einer netzübergreifenden Kommunikationsverbindung (12) von der jeweiligen zweiten Kommunikationseinrichtung (5.21, 5.22, 5.23, 5.31, 5.32) über eine zugeordnete zweite Vermittlungsstelle (3.2, 3.3) zur ersten Vermittlungsstelle (3.1) initiieren.

11. Verfahren nach Anspruch 10, bei dem in der ersten und zweiten Vermittlungsstelle (3.2, 3.3) eine erste bzw. zweite Call-Proxy-Einheit (11.1, 11.2) vorgesehen sind, wobei über die zweite Call-Proxy-Einheit (11.2) anhand der der Serviceroutine zugeordneten Kommunikationsportnummer (Kx) und/oder der der jeweiligen zweiten Kommunikationseinrichtung (5.21, 5.22, 5.23, 5.31, 5.32) zugeordneten netzwerkinternen Systemadressnummer (Sx) eine Adressnummer (Vx) der ersten Vermittlungsstelle (3.1) bzw. der ersten Call-Proxy-Einheit (11.1) bestimmt wird und eine Kommunikationsverbindung (12) zwischen der ersten und zweiten Call-Proxy-Einheit (11.1, 11.2) über ein drittes Kommunikationsnetzwerk (4) aufgebaut wird.

12. Verfahren nach Anspruch 10 oder 11, bei dem über die zwischen der zweiten Kommunikationseinrichtung (5.22) über die zweite Call-Proxy-Einheit (11.2) zur ersten Call-Proxy-Einheit (11.1) aufgebaute Kommunikationsverbindung (12) Betriebsparameter oder Alarmmeldungen betreffende Daten übermittelt werden.

13. Verfahren nach Anspruch 12, bei dem die an die erste Call-Proxy-Einheit (11.1) übermittelten Daten in der ersten Vermittlungsstelle (3.1) gespeichert oder einer Call-Service-Einheit oder an ein Mailsystem innerhalb des ersten Kommunikationsnetzwerks (2.1) übermittelt werden.

## Claims

1. Method for setting up a cross-network communication connection (8) between a first communication device (5.11) in a first communication network (2.1) and a communication application in a second communication device (5.22) in a second communication network (2.2) via a first switching unit (3.1) connected to the first communication network (2.1) and a second switching unit (3.2) connected to the second communication network (2.2), a system address number (Sx*) which is network-internal with respect to the second communication network (3.2) being assigned to the second communication device (5.22) and an application address number (Ax*) which is network-internal with respect to the second communication network (3.2) being assigned to the communication application provided in the second communication device (5.22),
- in which a unique symbolic switching address number (Vx) is assigned to the second switching unit (3.2), a symbolic system address number (Sx) which is unique with respect to the first communication network (3.1) is assigned to the second communication device (5.22), and a symbolic application address number (Ax) which is unique with respect to the first communication network (3.1) is assigned to the communication application provided in the second communication device (5.22),
- in which a symbolic address indicator (9) comprising at least the symbolic switching address number (Vx), the symbolic system address number (Sx) and the symbolic application address number (Ax) is formed,
- in which, starting from the first communication device (5.11), a communication connection (8) to the second switching unit (3.2) is set up via the first switching unit (3.1) using the symbolic switching address number (Vx) and is used to at least partially transmit the symbolic address indicator (9) to the second switching unit (3.2),
- in which at least the symbolic system address number (Sx) and application address number (Ax) contained in the transmitted symbolic address indicator (9) are determined and are compared with data records stored in the second switching unit (3.2), and the unique network-internal system address number (Sx*) and application address number (Ax*) are determined from the data records stored in the second switching unit (3.2) using the symbolic address numbers (Sx, Ax) contained in the address indicator (9), and
- in which the communication connection (8) to the communication application is continued via the second communication device (5.22) using the network-internal address numbers (Sx*, Ax*),
- in which the symbolic address indicator (9) of the cross-network communication connection (8) is respectively generated in the first communication network (3.1) before the connection is set up in the first communication device (5.11), is transmitted to the first switching unit (3.1) and is stored in the first switching unit (3.1),
- in which a connection request containing at least one identifier (IPx) which identifies the first communication device (5.11) is transmitted from the first communication device (5.11) to the first switching unit (3.1), and the associated symbolic address indicator (9) is determined in the first switching unit (3.1) using the identifier (IPx) transmitted with the connection request.

2. Method according to Claim 1, in which the setting-up of the cross-network communication connection (8) is initiated via a communication application executed in the first communication device (5.11).

3. Method according to either of Claims 1 and 2, in which a unique network-internal system address number (Sx*) of the second communication device (5.22) is determined in the second switching unit (3.2) using the symbolic address number (Sx) contained in the symbolic address indicator (9) by means of the data records stored in the second switching unit (3.2), a connection to the determined second communication device (5.22) in the second communication network (2.2) is set up, and the symbolic address indicator (9) is at least partially transmitted to the determined second communication device (5.22).

4. Method according to Claim 3, in which the unique network-internal application address number (Ax*) of the communication application to be connected is determined in the second communication device (5.22) using the symbolic address number (Ax) contained in the symbolic address indicator (9) by means of the data records stored in the second switching unit (3.2), and the determined communication application in the second communication device (2.2) is connected.

5. Method according to one of Claims 1 to 4, in which the first and second switching units (3.1, 3.2) are connected to one another via a Virtual Private Network (VPN) tunnel connection (10).

6. Method according to one of Claims 1 to 5, in which the switching units (3.1, 3.2, 3.3) are each formed by an Application Level Firewall unit (ALF unit) each having at least one proxy server unit (7.1, 7.2, 7.3).

7. Method according to Claim 6, in which the communication networks (2.1, 2.2, 2.3) respectively connected to the ALF units are separated at the Internet protocol level via the ALF units.

8. Method according to one of Claims 1 to 7, in which the identifier (IPx) identifying the first communication device (5.11) is at least partially formed from the Internet protocol address of the first communication device (5.11).

9. Method according to Claim 8, in which client and server communication applications, in which data are transmitted using a Transmission Control Protocol (TCP) data connection, are executed as communication applications in the first or second communication device (5.11, 5.22).

10. Method according to one of Claims 1 to 9, in which service routines provided in the second communication devices (5.21, 5.22, 5.23, 5.31, 5.32) are executed and automatically initiate the setting-up of a cross-network communication connection (12) from the respective second communication device (5.21, 5.22, 5.23, 5.31, 5.32) to the first switching centre (3.1) via an associated second switching centre (3.2, 3.3) on the basis of the presence of predefined operating states or events.

11. Method according to Claim 10, in which a first and a second call proxy unit (11.1, 11.2) are provided in the first and second switching centres (3.2, 3.3), an address number (Vx) of the first switching centre (3.1) or the first call proxy unit (11.1) being determined via the second call proxy unit (11.2) using the communication port number (Kx) assigned to the service routine and/or the network-internal system address number (Sx) assigned to the respective second communication device (5.21, 5.22, 5.23, 5.31, 5.32), and a communication connection (12) being set up between the first and second call proxy units (11.1, 11.2) via a third communication network (4).

12. Method according to Claim 10 or 11, in which data relating to operating parameters or alarm messages are transmitted via the communication connection (12) set up between the second communication device (5.22) and the first call proxy unit (11.1) via the second call proxy unit (11.2).

13. Method according to Claim 12, in which the data transmitted to the first call proxy unit (11.1) are stored in the first switching centre (3.1) or are transmitted to a call service unit or to a mail system inside the first communication network (2.1).

## Revendications

1. Procédé d'établissement d'une liaison de communication (8) interréseau entre un premier appareil de communication (5.11) d'un premier réseau de communication (2.1) et une application de communication dans un deuxième appareil de communication (5.22) d'un deuxième réseau de communication (2.2) par le biais d'une première unité de commutation (3.1) connectée au premier réseau de communication (2.1) et d'une deuxième unité de commutation (3.2) connectée au deuxième réseau de communication (2.2), un numéro d'adresse de système (Sx*) interne au réseau en référence au deuxième réseau de communication (3.2) étant associé au deuxième appareil de communication (5.22) et un numéro d'adresse d'application (Ax*) interne au réseau en référence au deuxième réseau de communication (3.2) étant associé à l'application de communication prévue dans le deuxième appareil de communication (5.22),
- selon lequel un numéro d'adresse de commutation univoque symbolique (Vx) est associé à la deuxième unité de commutation (3.2), un numéro d'adresse de système univoque symbolique (Sx) en référence au premier réseau de communication (3.1) est associé au deuxième appareil de communication (5.22) et un numéro d'adresse d'application univoque symbolique (Ax) en référence au premier réseau de communication (3.1) est associé à l'application de communication prévue dans le deuxième appareil de communication (5.22),
- selon lequel un indicateur d'adresse symbolique (9) est formé, lequel inclut au moins le numéro d'adresse de commutation symbolique (Vx), le numéro d'adresse de système symbolique (Sx) et le numéro d'adresse d'application symbolique (Ax),
- selon lequel une liaison de communication (8) est établie du premier appareil de communication (5.11) vers la deuxième unité de commutation (3.2) au moyen du numéro d'adresse de commutation symbolique (Vx) par le biais de la première unité de commutation (3.1), liaison de communication par le biais de laquelle l'indicateur d'adresse symbolique (9) est transmis au moins partiellement à la deuxième unité de commutation (3.2),
- selon lequel au moins le numéro d'adresse de système (Sx) et le numéro d'adresse d'application (Ax) symboliques contenus dans l'indicateur d'adresse symbolique (9) transmis sont déterminés, puis comparés avec les jeux de données stockés dans la deuxième unité de commutation (3.2), et le numéro d'adresse de système (Sx*) ou le numéro d'adresse d'application (Ax*) internes au réseau univoques sont déterminés à l'aide des numéros d'adresse symboliques (Sx, Ax) contenus dans l'indicateur d'adresse symbolique (9) à partir des jeux de données stockés dans la deuxième unité de commutation (3.2) et
- selon lequel la liaison de communication (8) se poursuit vers l'application de communication à l'aide des numéros d'adresse internes au réseau (Sx*, Ax*) par le biais du deuxième appareil de communication (5.22),
- selon lequel l'indicateur d'adresse symbolique (9) de la liaison de communication (8) interréseau dans le premier réseau de communication (3.1) est respectivement généré dans le premier appareil de communication (5.11), communiqué à la première unité de commutation (3.1) et mis en mémoire dans la première unité de commutation (3.1) avant l'établissement de la liaison,
- selon lequel une demande de liaison comprenant au moins un identificateur (IPx) qui identifie le premier appareil de communication (5.11) est communiquée du premier appareil de communication (5.11) à la première unité de commutation (3.1) et l'indicateur d'adresse symbolique (9) associé est déterminé dans la première unité de commutation (3.1) à l'aide de l'identificateur (IPx) communiqué avec la demande de liaison.

2. Procédé selon la revendication 1, selon lequel l'établissement de la liaison de communication (8) interréseau est initiée par le biais d'une application de communication exécutée dans le premier appareil de communication (5.11).

3. Procédé selon l'une des revendications 1 à 2, selon lequel un numéro d'adresse de système (Sx*) interne au réseau univoque du deuxième appareil de communication (5.22) est déterminé dans la deuxième unité de commutation (3.2) à l'aide du numéro d'adresse symbolique (Sx) contenu dans l'indicateur d'adresse symbolique (9) par le biais des jeux de données stockés dans la deuxième unité de commutation (3.2), une liaison vers le deuxième appareil de communication (5.22) déterminé du deuxième réseau de communication (2.2) est établie et l'indicateur d'adresse symbolique (9) est transmis au moins partiellement au deuxième appareil de communication (5.22) déterminé.

4. Procédé selon la revendication 3, selon lequel le numéro d'adresse d'application (Ax*) interne au réseau univoque de l'application de communication à connecter est déterminé dans le deuxième appareil de communication (5.22) à l'aide du numéro d'adresse symbolique (Ax) contenu dans l'indicateur d'adresse symbolique (9) par le biais des jeux de données stockés dans la deuxième unité de commutation (3.2), et l'application de communication déterminée est connectée dans le deuxième appareil de communication (2.2).

5. Procédé selon l'une des revendications 1 à 4, selon lequel la première et la deuxième unité de commutation (3.1, 3.2) sont reliées l'une à l'autre par le biais d'une liaison en tunnel (10) d'un réseau privé virtuel, VPN.

6. Procédé selon l'une des revendications 1 à 5, selon lequel les unités de commutation (3.1, 3.2, 3.3) sont respectivement formées par une unité de pare-feu au niveau de l'application, unité ALF, qui comprend respectivement au moins une unité de serveur proxy (7.1, 7.2, 7.3).

7. Procédé selon la revendication 6, selon lequel une déconnexion des réseaux de communication (2.1, 2.2, 2.3) respectivement connectés aux unités ALF est effectuée au niveau du protocole Internet par le biais des unités ALF.

8. Procédé selon l'une des revendications 1 à 7, selon lequel l'identificateur (IPx) qui identifie le premier appareil de communication (5.11) est formé au moins partiellement à partir de l'adresse de protocole Internet du premier appareil de communication (5.11).

9. Procédé selon la revendication 8, selon lequel des applications de communication client ou serveur sont exécutées en tant qu'applications de communication dans le premier ou le deuxième appareil de communication (5.11, 5.22), avec lesquelles la transmission de données s'effectue par le biais d'une liaison de données à protocole de commande de transmission, TCP.

10. Procédé selon l'une des revendications 1 à 9, selon lequel des routines de service prévues dans les deuxièmes appareils de communication (5.21, 5.22, 5.23, 5.31, 5.32) sont exécutées, lesquelles initient automatiquement l'établissement d'une liaison de communication (12) interréseau du deuxième appareil de communication (5.21, 5.22, 5.23, 5.31, 5.32) correspondant vers le premier central de commutation (3.1) par le biais d'un deuxième central de commutation (3.2, 3.3) associé en fonction de la présence d'états opérationnels ou d'événements prédéfinis.

11. Procédé selon la revendication 10, selon lequel une première ou une deuxième unité de proxy d'appel (11.1, 11.2) est prévue dans le premier et le deuxième central de commutation (3.2, 3.3), un numéro d'adresse (Vx) du premier central de commutation (3.1) ou de la première unité de proxy d'appel (11.1) étant déterminé par le biais de la deuxième unité de proxy d'appel (11.2) à l'aide du numéro de port de communication (Kx) associé à la routine de service et/ou du numéro d'adresse de système (Sx) interne au réseau associé au deuxième appareil de communication (5.21, 5.22, 5.23, 5.31, 5.32) correspondant, et une liaison de communication (12) est établie entre la première et la deuxième unité de proxy d'appel (11.1, 11.2) par le biais d'un troisième réseau de communication (4).

12. Procédé selon la revendication 10 ou 11, selon lequel des données concernant des paramètres de fonctionnement ou des messages d'alarme sont communiquées par le biais de la liaison de communication (12) établie entre le deuxième appareil de communication (5.22) et la première unité de proxy d'appel (11.1) par le biais de la deuxième unité de proxy d'appel (11.2).

13. Procédé selon la revendication 12, selon lequel les données communiquées à la première unité de proxy d'appel (11.1) sont mises en mémoire dans le premier central de commutation (3.1) ou sont communiquées à une unité de service d'appel ou à un système de messagerie à l'intérieur du premier réseau de communication (2.1).
